# NEW EUROPEAN PATENT SPECIFICATION

(11) **EP 1 027 499 B2**
(45) Date of publication and mention of the opposition decision: **03.12.2014**
(45) Mention of the grant of the patent: 01.07.2009
(21) Application number: 98957414.0
(22) Date of filing: 29.10.1998
(51) Int. Cl.: D21H 13/00, D21H 15/10, D04H 1/54

(54) **HEAT SEAL INFUSION WEB MATERIAL AND METHOD OF MANUFACTURE**
HEISSSIEGEL-INFUSIONSPAPIER UND VERFAHREN ZU SEINER HERSTELLUNG
MATERIAU DE TYPE VOILE THERMOSOUDE POUR INFUSIONS ET PROCEDE DE FABRICATION

(30) Priority: 31.10.1997 US 64142 P
(43) Date of publication of application: 16.08.2000
(60) Divisional application: 09075171.0
(73) Proprietor: Ahlstrom Nonwovens LLC, Windsor Locks, CT 06096 (US)
(72) Inventor: BYALIK, Ludmila, West Hartford, CT 06117 (US); VIAZMENSKY, Helen, Avon, CT 06001 (US)
(74) Representative: Kirsch, Susan Edith
(86) International application number: PCT/US1998/022967
(87) International publication number: WO 1999/023306

(56) References cited:
- EP-A- 0 255 690
- EP-A- 0 432 489
- EP-A- 0 446 138
- GB-A- 904 826
- US-A- 2 414 833
- US-A- 4 289 580
- US-A- 4 289 580
- US-A- 4 830 904
- US-A- 5 173 154
- US-A- 5 173 154
- US-A- 5 464 687
- US-A- 5 527 429
- US-A- 5 573 841

## Description

### Field of the Invention

The present invention relates generally to infusion web materials and more particularly is concerned with a new and improved heat sealable fibrous web having particular application as an infusion packaging material, such as for tea bags and the like.

### Background of the Invention

Heretofore, heat sealable tea bag papers have comprised both single phase and multi-phase sheet material. Both materials have included non-heat seal fibers such as long natural and synthetic cellulosic fibers in combination with wood pulps and heat seal fibers. The particular heat seal fibers used included thermoplastic fibers, such as the fibers of a copolymer of polyvinyl acetate, commonly referred to as "vinyon", polyolefin fibers, such as polyethylene and polypropylene, polyolefin pulps and combinations thereof. The heat sealable papers preferably are produced using a wetlaid papermaking process and form a highly porous and open structural arrangement which, despite the heat seal fiber's hydrophobic character, permits adequate liquid permeability and transmission of both hot water and tea liquor through the sheet materials during the normal brewing process. During manufacture the sheet material is dried by a conventional heat treatment resulting in a slight contraction of the heat seal thermoplastic materials that beneficially maintains and enhances the desired open distribution of the heat seal particles throughout the sealing phase of the web.

Two general types of thermoplastic heat sealable materials have been used heretofore in heat seal infusion web production. The first contains the polyolefin pulps, vinyon fibers, or blends of these materials which typically deliver products with a wide or broad sealing temperature range, or operational window, due to difference in the melting point of polymers used in the formulations. A range of about 130 - 240° C is typical. Unfortunately, when these products have a moderate to low heat seal fiber concentration they do not provide a strong wet seal bond in boiling water, which is critical for tea brewing. When a high level of thermoplastic is used in the web material, such as more than 50 percent by weight, the seal strength increases, but degradation is noted in the infusion characteristics of the bag.

A second generation of teabag paper is produced with polypropylene fiber in the sealing phase. This product typically delivers high seal strength and good infusion; however, due to the higher melting point of the polypropylene fibers, it seals at higher temperatures and significantly narrows the operational window of the teabag forming equipment to about 190 - 240° C. As a result, the tea packing machines must be adjusted to more precisely monitor the temperature and pressure applied by the sealing elements in order to properly seal the bags. Also, when a teapacking machine does not have very good temperature control and the temperature profile on the sealing elements is not precise, the teapacker is likely to have quality problems with the sealed teabags such that the bags tend to leak in both the dry and wet stages.

A combination of polypropylene and polyethylene fibers have been tried in the sheet material in an effort to increase the melting range of the infusion web material and therefore increase the sealing temperature range (operational window) on the packing machine. However, it has been found that such blends of polyethylene and polypropylene fibers do not deliver the desired result. The strength of both the wet and dry seals of the paper produced using such blends is weaker than 100% polypropylene fiber.

Fibrillar materials formed from polyolefins and similar polymers, commonly referred to as "synthetic pulps", exhibit certain processing advantages over the smooth rod-like synthetic fibers. The synthetic pulps exhibit a fibrilliform morphology and a resultant higher specific surface area. Additionally, they are more readily dispersible in water without the need for additional surface active agents and, although hydrophobic in nature, they do not dewater as rapidly as conventional synthetic fibers and therefore avoid plugging problems in lines, pumps, etc. within the paper-making equipment. Further, these synthetic particles do not exhibit the tendency to "float out" in chests and holding tanks used in the typical wet paper-making process. For these reasons the synthetic pulps exhibit a potential for use as the heat seal component of infusion package materials, particularly since they provide substantially improved wet seal strength under end use conditions, that is, improved wet seal strength in a hot aqueous liquid environment and improved resistance to seal delamination under boiling and steaming test conditions.

Despite the apparent advantages evident in the use of synthetic pulp for heat seal infusion web application, it has been found that such material exhibits a significant disadvantage with respect to its infusion properties and wettability. This disadvantage relates directly to its usefulness in the paper-making process, that it, its fibrilliform structure and high specific surface area. When the synthetic pulp is heat treated, as in the conventional drying operation, it tends to soften and flow, typically forming a film, albeit discontinuous, particularly in the heat seal phase of a multi-phase sheet material. Unlike the highly porous and open web structure formed by the larger and smoother synthetic fibers, the high surface area pulp with its lower density, smaller particle size and more numerous particles results in a closed, low permeability structure. The result is that certain areas of the web surface are rendered water impermeable, substantially retarding or inhibiting infusion and reducing the water permeability and wettability of the material. In use, the non-wetted or partially wetted areas of the web material are easily observed as opaque areas on the sheet while the thoroughly wetted areas exhibit a transparent appearance. The reduced wettability of the web material coupled with its mottled opaque appearance influences the aesthetic attractiveness of the product under end use conditions and, therefore, its acceptability by the consumer.

EP-A-0 432 489 discloses a heat-adhesive synthetic composite fibre that comprises (A) an ethylene-vinyl alcohol copolymer filamentary constituent comprising a saponification product of a copolymer of (a) 30 to 70 mole percent of ethylene with (b) 70 to 30 mole percent of vinyl acetate, and (B) a copolyester filamentary constituent comprising a copolyesterification product of (c) a dicarboxylic acid component comprising 1.0 to 10.0 mole percent of at least one organic dicarboxylic acid compound having at least one metal sulphonate group with the balance consisting of at least one aromatic dicarboxylic acid compound, with (d) a diol component, wherein each of the said filamentary constituents extends along the longitudinal axis of the composite fibre and wherein the ethylene-vinyl alcohol copolymer filamentary constituent forms at least a portion of the outer surface of the composite fibre. A nonwoven fabric may be produced by a wet sheet-forming method from an aqueous slurry containing such heat-adhesive composite fibres together with at least one other type of fibre, for example inorganic, cellulosic, polyolefin, polyester, polyamide, polyacrylic or aramid fibres.

US-A-5 573 841 discloses a hydraulically entangled nonwoven composite fabric comprising a matrix of substantially continuous thermoplastic polymer filaments, and at least one substantially non-thermoplastic fibrous material integrated in the matrix, the composite fabric being adapted to autogenously bond to itself upon application of heat. The thermoplastic polymer filaments may be spunbonded filaments, e.g. bicomponent spunbonded filaments composed of polyolefins, polyamides, polyesters or polyurethanes. The substantially non-thermoplastic fibrous material may be selected from, for example, wood pulp fibres, cotton linters, flax, synthetic fibres and mixtures thereof. The composite fabric may be made by depositing the non-thermoplastic fibrous material onto the matrix of continuous filaments by dry-forming or wet-forming techniques, or the composite material may be formed by superposing a coherent sheet of pulp fibres on a layer of continuous filaments. Thereafter, the composite material is subjected to hydraulic entangling.

### Summary of the Invention

The present invention provides a new and improved heat seal fibrous web material exhibiting improved seal strength and good infusion while maintaining a broad operational window.

More specifically, and according to one aspect of the present invention, there is provided heat seal infusion sheet material according to claim 4.

Thus, there is provided a heat sealable fibrous web having a first phase consisting of cellulosic natural fibers and a second or heat seal phase consisting of sheath-core bicomponent thermoplastic materials having a length of less than 25 mm and with each component thereof exhibiting different melt characteristics and cellulosic natural fibers resulting in the above-noted improved characteristics.

Additionally, the present invention provides a new and improved process for the manufacture of heat seal infusion web materials having excellent infusion characteristics and improved strength characteristics according to claim 1. This process involves the modification of essentially only the heat seal phase of a multiphase heat seal infusion web material or, more specifically, only the heat seal component of the web material to facilitate improved infusion characteristics. This is accomplished by modifying the heat seal phase to incorporate therein the sheath-core bicomponent thermoplastic materials having a length of less than 25 mm and with each component thereof exhibiting different melt characteristics, thereby improving the wet and dry seal strength while maintaining a broad operational window and achieving high infusion rates at high, moderate and low heat seal fiber concentrations.

A better understanding of the features of construction, combination of elements and arrangement of parts, as well as the several steps of the process together with the relation of one or more of such steps with respect to each of the others and the article processing the features, properties and relation of elements of the invention will be obtained from the following detailed description that sets forth illustrative embodiments and is indicative of the way in which the principles of the invention are employed.

### Preferred Embodiment of the Invention

As mentioned hereinbefore, the present invention provides a technique for improving the sealing characteristics of heat seal fibrous web materials suited for use in tea bags or the like while maintaining good infusion qualities and a wide operational range. This is accomplished by incorporating sheath-core bicomponent thermoplastic materials having a length of less than 25 mm and with each component thereof exhibiting different melt characteristics in the heat seal phase of a multiphase infusion web material. Preferably, the core of the bicomponent fiber exhibits a higher melting point than the sheath.

As mentioned, the invention is primarily concerned with multi-phase sheet material, particularly multi-phase water laid material produced in accordance with conventional paper-making techniques. In this connection, numerous different techniques have been employed heretofore to make the multi-phase fibrous webs. Typical of those found most useful in the production of infusion web materials is the dual headbox technique described in Osborne's U.S. Patent No. 2.414,833. Dry lay processes also may be employed.

In accordance with the Osbome process, an aqueous suspension of non-heat seal fibers flows through a primary headbox and an inclined wire screen whereby the fibers are continuously deposited as a base phase on the web-forming screen. The heat seal material is introduced into the primary headbox at a location immediately after or at the point of deposition of the non-heat seal fibers on the inclined wire. This may be carried out by means of an inclined trough or a secondary headbox in such a manner that the heat seal particles comingle slightly with the non-heat seal papermaking fibers flowing through the primary headbox. In this way, the non-thermoplastic fibers have a chance to provide a base mat or non-heat seal phase prior to the deposition of the top heat seal phase thereon. It will be understood, of course, that this can be reversed whereby the heat seal fibers are incorporated into the primary headbox with non-heat seal in the secondary headbox. As is appreciated, the heat seal phase is secured to the base phase by an interface formed by the intermingling of the particles within the aqueous suspensions. Typically, sheets produced in this manner have non-heat seal fibers covering the entire surface area of the sheet materials on the surface in contact with the inclined fiber collecting screen while the top of the sheet material has some non-heat seal fibers and some heat seal fibers, with the latter predominating. In this way there is no clear line of demarcation between the two phases of the multi-phase sheet material; yet there is a predominance of heat seal thermoplastic material on the top surface or top phase of the multi-phase sheet. The central or interface boundary, or course, is composed of a mixture of the two different types of fibers.

Although the technique or process described in the aforementioned U.S. Patent No. 2,414,833 is preferably followed, the heat seal material used in preparing the heat seal phase of the sheet material is different. To this end, it is advantageous to use sheath-core bicomponent thermoplastic materials having a length of less than 25 mm and with each component thereof exhibiting different melt characteristics in forming the heat seal phase of the fibrous nonwoven web. Suitable polymers for such bicomponent fibers include, but are not limited to, polyesters such as polyethylene terephthalate and polyolefins such as polyethylene and polypropylene.

As indicated above, the bi-component fibers of the wetlaid nonwoven web have a sheath-core configuration whereby the sheath member has a lower melting point than that of the core member. Typically the sheath and core members are made of different thermoplastic synthetic material although it is possible for the sheath member and the core member to be made of the same synthetic polymer such as polyesters so long as the polymer which forms the sheath member has a lower melting point than the polymer which forms the core member. Typical bicomponent fibers comprise a polyolefin sheath, for example, polyethylene surrounding a polypropylene or polyester core. The polyethylene sheath has a melting point low enough so that the bicomponent fibers can be bonded to one another by passing the nonwoven web through the dryer section of a papermaking machine. Other effective combinations include a sheath member made of polypropylene or of polyester with the same or different core materials.

The thermoplastic synthetic fibers which can be utilized for the sheath and core members of the present invention include those fibers which will melt or soften at a temperature below about 300° C. Typical thermoplastic synthetic fibers included in the present invention include those fibers which will melt of soften at a temperature within the range of about 110 - 240° C. Typical thermoplastic synthetic fibers include polyolefins containing 1 to 8 carbon atoms, e.g., polyethylene, polypropylene, polybutylene and copolymers thereof, polytetrafluoroethylene, polyesters, e.g., polyethylene terephthalate, polyvinyl acetate, polyvinyl chloride acetate, polyvinyl butyral, acrylic resins, e.g., polyacrylate, polymethylacrylate and polymethylmethacrylate, polyamides, namely nylon, polyvinyl chloride, polyvinylidene chloride, polyvinylidene fluoride, polystyrene, polyvinyl alcohol, polyurethanes, cellulosic resins, namely cellulose nitrate, cellulose acetate, cellulose acetate butyrate, ethyl cellulose, etc., copolymers of any of the above materials, e.g., ethylene-vinyl acetate copolymers, ethylene-acrylic acid copolymers, styrene-butadiene block copolymers, and the like.

The bicomponent fibers should be of a size that permits their use in a wetlaid paper-making process. Thus, lower denier per filament materials, for example, less than 20 dpf (22.22 dtex) and as low as about 1.0 dpf (1.11 dtex), should be employed. The operable range is 1.0 - 15.0 dpf (1.11 - 16.67 dtex) while the preferred material falls into the range of 1.5 - 6.0 dpf (1.67 - 6.67 dtex) and most preferably 1.5 - 3 dpf (1.67 - 3.33 dtex).

The fiber lengths employed also must be suited to the wetlaid process and therefore are less than 25 mm and preferable less than 20 mm in length. A typical operable range is 4 - 10 mm while the preferred length is 5 - 6 mm.

The bicomponent heat seal material is present in the web in amounts of from 15 to 45% by weight. A preferred fiber mix contains 15 - 35% by weight of the bicomponent fibers with the remainder comprised of natural fibers. The use of the wood pulp reduces the overall cost of the final product without materially affecting the physical properties thereof. Optimally, the concentration of bicomponent fibers is about 25% by weight.

Bicomponent fibers retain their fibrous character even when the low-melting component is at or near its melting temperature, as the high-melting component provides a supporting structure to retain the low-melting component in the general area in which it was applied. The high-melting component provides the bicomponent fibers with additional strength resulting in more open webs than those containing unicomponent fibers.

Currently preferred fibers according to the present invention are the composites wherein the bicomponent fibers in the web layers are selected from the group consisting of sheath/core fibers of the following resin combinations: polyethylene/polypropylene, polyethylene/polyester, polyethylene/polyethylene, polypropylene/polypropylene, polypropylene/polyester, and polyester/polyester. Specific examples of such fibers are the 2.0 denier polyethylene/polypropylene sheath/core fibers available from Fibervisions Inc. as Product Type 426. It is provided at a length of 4 - 6 mm and denier of 1.8 - 2.2 dpf (2 - 2.44 dtex) and has a sheath/core bicomponent configuration. Other 1.5-3 denier (1.67 - 3.33 dtex) polyethylene/polypropylene sheath/core fibers are available from various suppliers.

While it is not desired to limit the invention to any particular theory, it is believed that the improvements of the present invention are attained because heat applied to the multicomponent fiber web causes the lower melting component to become progressively softer as the temperature increases. The lower melting materials plasticize and, as long as the temperature does not exceed the plasticizing point of the higher melting fibers, the intermolecular bond of the lower melting fibers causes bonding to occur to the other fibers. Complete high strength sealing is subsequently achieved in the tea packing machines under localized pressure and temperature.

Typically, the fiber composition of the heat seal phase is such that it contains cellulosic paper-making fibers in addition to the heat seal fibers. In this convection, it has been found that for optimum results it is preferred that the heat seat component constitute approximately 40 to 75% of the fiber composition within the heat seal fiber phase and about 25% by weight of the infusion web. As will be appreciated, variations in the amount of heat seal material will depend on the specific Material utilized as well as the source of that material. Of course, a sufficient amount of heat seal component must be employed to provide satisfactory heat sealability in the end product.

It should be noted that the preferred heat seal polymers are those which have already received approval for use in food and beverage applications. Consequently, the multicomponent fibers made from polyolefins and vinyon are the preferred materials while other materials may be used for different end use applications. For infusion packages having application in the food and beverage field, it is preferable to employ approved natural cellulosic fibers and preferably cellulosic natural fibers, for example, fibers of bleached or unbleached kraft, Manila hemp, abaca, jute, sisal and other wood fibers. A variety of infuser web materials may be made from these fibers and utilized in accordance with the present invention. However, for ease of understanding and clarity of description, the invention is being described in its application to porous infusion web materials for use in the manufacture of teabags and the likes

The infusion characteristics of importance relative to heat seal web material relate to the rate at which water can pass into the teabag and tea liquor can pass out of the teabag as well as the degree of extraction which is able to take place within a specified time. This is usually reported in terms of first color" and "percent transmittance", respectively. When testing for first color, a teabag made from the material to be tested is carefully placed in quiet distilled water after the water has been brought to a boil. Using a stopwatch, the time is recorded at which the first amber stream appears at the bottom of the sample. A first color time of less than 12 seconds is required with less than 10 seconds being preferred. A first color of about 5 - 6 seconds is considered indicative of excellent infusion characteristics. Of course, thicker, heavier weight, 25 - 30 gsm and preferably 25 - 26 gsm, materials typically will have higher first color values than lighter materials of less than 25 gsm, preferably 12 - 22 gsm and most preferably 14 - 18 gsm.

The percent transmittance test is conducted by measuring the transmittance of the brew after a 60 second steep time using a Markson Colorimeter Model T-600 at a wavelength of 530 mµ and using a 1 cm cell. A target value for good infusion is in the mid-sixty percentile range with transmittance decreasing as infusion improves.

The test procedure used for determining wet delamination strength of the heat seal bond measures the time it takes for the seal to fail when subject to a standard static weight. A standard sample size of the heat sealable web material is formed into a loop with the two heat seal sides contacting each other. Heat and pressure are applied to form a seal therebetweeen. A dumbbell weight of a known value, e.g., 60 g or 100 g, is placed in the loop to apply equal force along the entire length of the seal, and the complete sample including the weight is suspended in hot water kept at a temperature of 100° C. The time in seconds from immersion until the seal fails allowing the weight to fall is recorded. The reported value is the value of repeatability based on two replicate tests, each from ten samples wherein all samples give test results within the range of 45 - 155 seconds.

The test procedure to quantify the dry seal strength measures the maximum force required to separate the dry sealed area. A strip of test material is folded in half with the heat seal sides contacting each other. The seal is formed under heat and pressure. The folded sample is cut remote of the seal and the unsealed ends are clamped in the jaws of an Instron tensile tester. The maximum force required to effect seal failure is recorded.

The following examples are given in order that the effectiveness of the present invention may be more fully understood. These examples are set forth for the purpose of illustration only and are not intended in any way to limit the practice of the invention. All parts are given by weight.

### ILLUSTRATIVE EXAMPLE I

This illustrative example shows the improved infusion and wet seal strength characteristics obtained by using bicomponent fibers according to the present invention.

A base phase fiber dispersion was prepared from hemp fibers and wood fibers and a separate heat seal fiber dispersion was prepared using a fiber formulation comprising polyethylene synthetic pulp polyethylene/polypropylene sheath/core bicomponent fibers of 2 dpf (2.22 dtex) and 5 - 6 mm length and kraft wood pulp. Using these dispersions, a two phase heat seal sheet material was formed on a papermaking machine to provide a web material having a basis weight of about 16.5 grams per square meter. That material is designated Sample A.

For comparison purposes, commercial web material was produced in the identical manner as Sample B using vinyon and synthetic pulp as the heat seal material. The web material was tested for infusion characteristics and wet seal strength and the results are reported in Table I. The first color and percent transmittance data is the average of four separate tests conducted in the manner set forth hereinbefore.

**Table I**

| | | A | B |
|---|---|---|---|
| Softwood | | 37.1 | 33.8 |
| Hemp | | 38.7 | 42.0 |
| Bicomponent fiber | | 16.9 | -- |
| Synthetic pulp | | 7.3 | 12.6 |
| Vinyon | | -- | 11.6 |
| Delamination (g/25mm) | | | |
| | Dry MD | 200 | 180 |
| | Dry CD | 147 | 125 |
| Wet delamination @ 100 g (sec) | | 600+ | 105 |
| Infusion | | | |
| | First Color (sec) | 6.1 | 6.1 |
| | Transmittance (%) | 65.6 | 65.0 |

### EXAMPLE II

This example compares the wet seal strength of infusion webs having different heat seal materials at different heat sealing temperatures. Sample E is in accordance with the invention the remaning samples are for illustration.

The procedure of Example I was followed except that the heat seal material only was changed. The wet delamination strength was tested using a 100 g weight. An acceptable target level is 300 seconds or greater. The results are set forth in Table II.

As can be seen, the bicomponent heat seal fibers with or without polyethylene synthetic pulp resulted in improved wet delamination strength.

When a bicomponent fiber was evaluated with the same total seal weight as previous formulation and the same PP/PE ratio, the seal strength of the paper was significantly increased and temperature range for sealability was increased from 190 - 240° C (in 100% PP heat seal paper) to 160 - 240° C (in bicomponent heat seal paper). Bicomponent fiber containing paper also delivered good infusion characteristics.

The same results were obtained when bicomponent fibers/PE pulp blends were compared to PP fibers/PE fibers/PE pulp blends. Product with bicomponent fiber delivered higher strength at lower temperatures.

**Table II**

| **Sample** | **Heat Seal Fibers** | **Wet Seal Strength** | | | | | |
|---|---|---|---|---|---|---|---|
| **Heat sealing Temperature (°C)** | | **145** | **160** | **175** | **190** | **210** | **240** |
| A | Polyethylene fibers | 0 | 13 | 86 | 188 | 211 | 437 |
| B | Polypropylene fibers | 0 | 0 | 0 | 600+ | 600+ | 600+ |
| C | 50% A / 50% B | 0 | 2 | 16 | 49 | 318 | 600+ |
| D | Polyethylene pulp plus C | 0 | 20 | 29 | 69 | 160 | 240 |
| E | Polyethylene/polypropylene sheath bicomponent | 0 | 490 | 600+ | 600+ | 600+ | 600+ |
| F | Polyethylene pulp plus E | 0 | 327 | 534 | 600+ | 600+ | 600+ |

### ILLUSTRATIVE EXAMPLE III

The procedure of Example I was repeated except that rayon fiber was added. The infusion web material produced had a basis weight of about 26 gsm and no synthetic pulp was used. The results are set forth in Table III.

**Table III**

| | | **A** | **B** | **C** |
|---|---|---|---|---|
| Softwood | | 18.3 | 18.3 | 17.4 |
| Hemp | | 48.8 | 48.8 | 58.9 |
| Rayon | | 9.0 | 9.0 | -- |
| Bicomponent | | 23.9 | 23.9 | 23.7 |
| Infusion | | | | |
| | First Color | 8.5 | 8.1 | 8.4 |
| | Transmittance (%) | 69.7 | 70.4 | 68.3 |

As will be apparent to persons skilled in the art, various modifications, adaptations and variations of the foregoing specific disclosure can be made without departing from the teaching of the present invention.

## Claims

1. A method of forming a heat seal infusion sheet material, said sheet material consisting of a combination of cellulosic natural fibers and and up to 45 percent by weight of thermoplastic fibers, wherein said thermoplastic fibers are sheath-core bicomponent thermoplastic materials having a length of less than 25 mm and with each component thereof exhibiting different melt characteristics, the method comprising the steps of:
(a) depositing a first dispersion of fiber on a fiber collecting wire, wherein said first dispersion comprises fibers selected from one of:
(i) cellulosic natural fibers; and
(ii) thermoplastic fibers, wherein said thermoplastic fibers are sheath-core bicomponent thermoplastic materials having a length of less than 25 mm and with each component thereof exhibiting different melt characteristics ;
(b) subsequently depositing a second dispersion of fiber over the first dispersion, wherein said second dispersion of fibers comprises fibers selected from the other of (a)(i) and (a)(ii); and
(c) dewatering and drying the deposited fibers to thereby form a heat seal infusion sheet material, wherein one surface of the sheet material consists of cellulosic natural fibers and thermoplastic fibers, with the latter predominating and the opposing surface of the sheet material consists of cellulosic natural fibers.

2. The method of claim 1 wherein the first dispersion of fiber and the second dispersion of fiber each comprise a dispersing fluid.

3. The method of claim 1, wherein said bicomponent fibers are water dispersible.

4. Heat seal infusion sheet material consisting of a fibrous non-woven web, said web consisting of a combination of cellulosic natural fibers and between 15 and 45 percent by weight of thermoplastic fibers, wherein said thermoplastic fibers are sheath-core bicomponent thermoplastic materials having a length of less than 25 mm and with each component thereof exhibiting different melt characteristics, wherein one surface of the sheet material consists of cellulosic natural fibers and thermoplastic fibers, with the latter predominating and the opposing surface of the sheet material consists of cellulosic natural fibers, wherein the heat seal infusion sheet material is obtainable by the process of claim 1.

5. The sheet material of claim 4 wherein the non-woven web material has an operational window that falls within the range of 110-240°C.

6. The sheet material of claim 4 or claim 5, wherein the softening temperature of said central core is higher than the softening temperature of said outer sheath.

7. The sheet material of any of claims 4 to 6, wherein said bicomponent materials are comprised of materials selected from the group consisting of polyolefins of 1 - 8 20 carbon atoms and polyesters.

8. The sheet material of any one of claims 4 to 7, wherein the bicomponent materials are selected from the group consisting of polyethylene/polypropylene, polyethylene/polyester, polyethylene/polyethylene, polypropylene/polypropylene, 25 polypropylene/polyester and copolyester/polyester.

9. The sheet material of any one of claims 4 to 8, wherein said bicomponent materials make up 15-35% by weight of the sheet material.

10. The sheet material of any of claims 4 to 9, wherein said bicomponent materials have a denier per filament size in the range of about 1.0 - 20.0 dpf (1.11 - 22.22 dtex).

11. The sheet material of claim 10, wherein said denier per filament range is 1.5 - 6.0 dpf (1.67 - 6.67 dtex).

12. The sheet material any of claims 4 to 11, having infusion characteristics that include a first color infusion time of less than 12 seconds.

13. The sheet material of any of claims 4 to 12, having a wet delamination seal strength of greater than 300 seconds at 100°C using a static weight of 100g.

14. The heat seal infusion sheet material of claim 4 wherein the bicomponent thermoplastic material comprises:
a first material selected from a polyolefin containing I to 8 carbon atoms, polyethylene, polypropylene, polybutylene, polybutylene copolymers, polytetrafluoroethylene, polyester, copolyester, polyethylene terephthalate, polyvinyl acetate, polyvinyl chloride acetate, polyvinyl butyral, acrylic resin, polyacrylate, polymethylacrylate, polymethylmethacrylate, polyamide, nylon, polyvinyl chloride, polyvinylidene chloride, polyvinylidene fluoride, polystyrene, polyvinyl alcohol, polyurethane, a cellulosic resin, cellulose nitrate, cellulose acetate, cellulose acetate butyrate, ethyl cellulose, ethylenevinyl acetate copolymer, ethylene-acrylic acid copolymer, styrenebutadiene block copolymer; and
a second material selected from a polyolefin containing 1 to 8 carbon atoms, polyethylene, polypropylene, polybutylene, polybutylene copolymers, polytetrafluoroethylene, polyester, copolyester, polyethylene terephthalate, polyvinyl acetate, polyvinyl chloride acetate, polyvinyl butyral, acrylic resin, polyacrylate, polymethylacrylate, polymethylmethacrylate, polyamide, nylon, polyvinyl chloride, polyvinylidene chloride, polyvinylidene fluoride, polystyrene, polyvinyl alcohol, polyurethane, a cellulosic resin, cellulose nitrate, cellulose acetate, cellulose acetate butyrate, ethyl cellulose, ethylenevinyl acetate copolymer, ethylene-acrylic acid copolymer, styrenebutadiene block copolymer.

## Patentansprüche

1. Verfahren zum Bilden eines Heißsiegelinfusionsschichtmaterials, wobei das Schichtmaterial eine Kombination aus zellulosehaltigen natürlichen Fasern und bis zu 45 Gewichtsprozent thermoplastischer Fasern umfasst, wobei die thermoplastischen Fasern thermoplastische Zweikomponentenmaterialien mit Hülle und Kern und einer Länge von weniger als 25 mm sind und wobei jede Komponente davon verschiedene Schmelzcharakteristiken zeigt, wobei das Verfahren die folgenden Schritte umfasst:
(a) Abscheiden einer ersten Faserdispersion auf einem Fasersammelsieb, wobei die erste Dispersion Fasern umfasst, die aus einem der folgenden ausgewählt sind:
(i) zellulosehaltigen natürlichen Fasern; und
(ii) thermoplastischen Fasern, wobei die thermoplastischen Fasern thermoplastische Zweikomponentenmaterialien mit einer Länge von weniger als 25 mm sind und wobei jede Komponente davon verschiedene Schmelzcharakteristiken zeigt,
(b) anschließendes Abscheiden einer zweiten Faserdispersion über der ersten Dispersion, wobei die zweite Faserdispersion Fasern umfasst, die aus der anderen der (a)(i) und (a)(ii) ausgewählt sind; und
(c) Entwässern und Trocknen der abgeschiedenen Fasern, um dadurch ein Heißsiegel-Aufgussschichtmaterial zu bilden, wobei eine Oberfläche des Schichtmaterials zellulosehaltige natürliche Fasern und thermoplastische Fasern umfasst, wobei die letzteren vorherrschen und die entgegengesetzte Oberfläche des Schichtmaterials aus zellulosehaltigen natürlichen Fasern besteht.

2. Verfahren nach Anspruch 1, wobei die erste Faserdispersion und die zweite Faserdispersion jeweils ein Dispergierfluid umfassen.

3. Verfahren nach Anspruch 1, wobei die Zweikomponentenfasern in Wasser dispergierbar sind.

4. Heißsiegelinfusionsschichtmaterial, das eine fasrige Vlies- bzw. nicht gewebte Bahn umfasst, welche eine Kombination aus zellulosehaltigen natürlichen Fasern und zwischen 15 und 45 Gewichtsprozent thermoplastischer Fasern umfasst, wobei die thermoplastischen Fasern thermoplastische Zweikomponentenmaterialien mit Hülle und Kern und mit einer Länge von weniger als 25 mm sind und wobei jede Komponente davon verschiedene Schmelzcharakteristiken zeigt, wobei eine Oberfläche des Schichtmaterials aus zellulosehaltigen natürlichen Fasern und thermoplastischen Fasern besteht, wobei die letzteren vorherrschen und die entgegengesetzte Oberfläche des Schichtmaterials aus zellulosehaltigen natürlichen Fasern besteht, wobei das Heißsiegelinfusionsschichtmaterial durch das Verfahren nach Anspruch 1 erhalten werden kann.

5. Schichtmaterial nach Anspruch 4, wobei das Vliesbahnmaterial ein Betriebsintervall hat, das in den Bereich von 110 - 240°C fällt.

6. Schichtmaterial nach Anspruch 4 oder Anspruch 5, wobei die Erweichungstemperatur des zentralen Kerns höher als die Erweichungstemperatur der Außenhülle ist.

7. Schichtmaterial nach einem der Ansprüche 4 bis 6, wobei die Zweikomponentenmaterialien aus Materialien bestehen, die aus der Gruppe ausgewählt sind, die aus Polyolefinen mit 1 - 8 Kohlenstoffatomen und Polyestern bestehen.

8. Schichtmaterial nach einem der Ansprüche 4 bis 7, wobei die Zweikomponentenmaterialien aus der Gruppe ausgewählt sind, die aus Polyethylen/Polypropylen, Polyethylen/Polyester, Polyethylen/Polyethylen, Polypropylen/Polypropylen, Polypropylen/Polyester und Copolyester/Polyester besteht.

9. Schichtmaterial nach einem der Ansprüche 4 bis 8, wobei die Zweikomponentenmaterialien 15 - 35 Gewichtsprozent des Schichtmaterials ausmachen.

10. Schichtmaterial nach einem der Ansprüche 4 bis 9, wobei die Zweikomponentenmaterialien ein Denier pro Fadengröße im Bereich von etwa 1,0 - 20,0 dpf (1,11 - 22,22 dtex) haben.

11. Schichtmaterial nach Anspruch 10, wobei das Denier pro Fadenbereich 1,5 - 6,0 dpf (1,67 - 6,67 dtex) ist.

12. Schichtmaterial nach einem der Ansprüche 4 bis 11, das Infusionscharakteristiken hat, welche eine erste Farbinfusionszeit von weniger als 12 Sekunden umfassen.

13. Schichtmaterial nach einem der Ansprüche 4 bis 12, das eine Nassdelaminierungs- bzw. Schichtablösungs-Siegelnahtfestigkeit von mehr als 300 Sekunden bei 100°C bei Verwendung eines statischen Gewichts von 100 g hat.

14. Heißsiegelinfusionsschichtmaterial nach Anspruch 4, wobei das thermoplastische Zweikomponentenmaterial umfasst:
ein erstes Material, das ausgewählt ist aus einem Polyolefin, das 1 bis 8 Kohlenstoffatome enthält, Polyethylen, Polypropylen, Polybutylen, Polybutylencopolymeren, Polytetrafluorethylen, Polyester, Copolyester, Polyethylenterephthalat, Polyvinylacetat, Polyvinylchloridacetat, Polyvinylbutyral, Acrylharz, Polyacrylat, Polymethylacrylat, Polymethylmethacrylat, Polyamid, Nylon, Polyvinylchlorid, Polyvinylidenchlorid, Polyvinylidenfluorid, Polystyren, Polyvinylalkohol, Polyurethan, einem zellulosehaltigen Harz, Zellulosenitrat, Zelluloseacetat, Zelluloseacetatbutyrat, Ethylzellulose, Ethylenvinylacetatcopolymer, Ethylenacrylsäurecopolymer, Styrenbutadienblockcopolymer; und
ein zweites Material, das ausgewählt ist aus einem Polyolefin, das 1 bis 8 Kohlenstoffatome enthält, Polyethylen, Polypropylen, Polybutylen, Polybutylencopolymeren, Polytetrafluorethylen, Polyester, Copolyester, Polyethylenterephthalat, Polyvinylacetat, Polyvinylchloridacetat, Polyvinylbutyral, Acrylharz, Polyacrylat, Polymethylacrylat, Polymethylmethacrylat, Polyamid, Nylon, Polyvinylchlorid, Polyvinylidenchlorid, Polyvinylidenfluorid, Polystyren, Polyvinylalkohol, Polyurethan, einem zellulosehaltigen Harz, Zellulosenitrat, Zelluloseacetat, Zelluloseacetatbutyrat, Ethylzellulose, Ethylenvinylacetatcopolymer, Ethylenacrylsäurecopolymer, Styrenbutadienblockcopolymer.

## Revendications

1. Procédé de formation d'un matériau en feuille thermosoudable pour infusion, ledit matériau en feuille étant constitué d'une combinaison de fibres naturelles cellulosiques et jusq'à 45 pour cent en poids de fibres thermoplastiques, lesdites fibres thermoplastiques étant des matériaux thermoplastiques à deux composants enveloppe-noyau ayant une longueur inférieure à 25 mm et chaque composant exhibant des caractéristiques de fusion différentes, le procédé comprenant les étapes consistant à :
(a) déposer une première dispersion de fibres sur une platine de recueil de fibre, où ladite première dispersion comprend des fibres choisies parmi l'une des suivantes :
(i) fibres naturelles cellulosiques ; et
(ii) fibres thermoplastiques, lesdites fibres thermoplastiques étant des matériaux thermoplastiques à deux composants enveloppe-noyau ayant une longueur inférieure à 25 mm et chaque composant exhibant des caractéristiques de fusion différentes ;
(b) déposer ensuite une deuxième dispersion de fibres sur la première dispersion, où ladite deuxième dispersion de fibres comprend des fibres choisies parmi l'autre de (a)(i) et (a) (ii) ; et
(c) déshydrater et sécher les fibres déposées afin de former un matériau en feuille thermosoudable pour infusion, une surface du matériau en feuille étant constitué de fibres naturelles cellulosiques et de fibres thermoplastiques, ces dernières étant prédominantes et la surface opposée du matériau en feuille étant constitué de fibres naturelles cellulosiques.

2. Procédé selon la revendication 1, dans lequel la première dispersion de fibres et la deuxième dispersion de fibres comprennent chacune un liquide de dispersion.

3. Procédé selon la revendication 1, dans lequel lesdites fibres à deux composants sont dispersibles dans l'eau.

4. Matériau en feuille thermosoudable pour infusion constitué d'un voile non tissé fibreux, ledit voile étant constitué d'une combinaison de fibres naturelles cellulosiques et entre 15 et 45 pour cent en poids de fibres thermoplastiques, lesdites fibres thermoplastiques étant des matériaux thermoplastiques à deux composants enveloppe-noyau ayant une longueur inférieure à 25 mm et chaque composant exhibant des caractéristiques de fusion différentes, une surface du matériau en feuille étant constitué de fibres naturelles cellulosiques et de fibres thermoplastiques, ces dernières étant prédominantes, et la surface opposée du matériau en feuille étant constitué de fibres cellulosiques, le matériau en feuille thermosoudable pour infusion pouvant être obtenu par le procédé selon la revendication 1.

5. Matériau en feuille selon la revendication 4, dans lequel le matériau de type voile non tissé a une fenêtre opérationnelle qui est comprise dans la plage allant de 110 à 240°C.

6. Matériau en feuille selon la revendication 4 ou 5, dans lequel la température de ramollissement dudit noyau central est supérieure à la température de ramollissement de ladite enveloppe externe.

7. Matériau en feuille selon l'une quelconque des revendications 4 à 6, dans lequel lesdits matériaux à deux composants comprennent des matériaux choisis dans le groupe constitué par les polyoléfines de 1 à 8 atomes de carbone et les polyesters.

8. Matériau en feuille selon l'une quelconque des revendications 4 à 7, dans lequel les matériaux à deux composants sont choisis dans le groupe constitué par les polyéthylène/polypropylène, polyéthylène/polyester, polyéthylène/polyéthylène, polypropylène/polypropylène, polypropylène/polyester et copolyester/polyester.

9. Matériau en feuille selon l'une quelconque des revendications 4 à 8, dans lequel lesdits matériaux à deux composants représentent de 15 à 35 % en poids du matériau en feuille.

10. Matériau en feuille selon l'une quelconque des revendications 4 à 9, dans lequel lesdits matériaux à deux composants ont un denier par taille de filament compris dans la plage allant d'environ 1,0 à 20,0 dpf (1,11 à 22,22 dtex).

11. Matériau en feuille selon la revendication 10, dans lequel ladite plage de denier par filament est de 1,5 à 6,0 dpf (1,67 à 6,67 dtex).

12. Matériau en feuille selon l'une quelconque des revendications 4 à 11, ayant des caractéristiques d'infusion qui comprennent un premier temps d'infusion colorée inférieur à 12 secondes.

13. Matériau en feuille selon l'une quelconque des revendications 4 à 12, ayant une résistance de soudure par délaminage humide supérieure à 300 secondes à 100°C en utilisant un poids statique de 100 g.

14. Matériau en feuille thermosoudable pour infusion selon la revendication 4, dans lequel le matériau thermoplastique à deux composants comprend :
➢ un premier matériau choisi parmi une polyoléfine comprenant de 1 à 8 atomes de carbone, un polyéthylène, un polypropylène, un polybutylène, les copolymères de polybutylène, un polytétrafluoroéthylène, un polyester, un copolyester, un téréphtalate de polyéthylène, un acétate de polyvinyle, un acétate-chlorure de polyvinyle, un polyvinylbutyral, une résine acrylique, un polyacrylate, un polyacrylate de méthyle, un polyméthacrylate de méthyle, un polyamide, un nylon, un chlorure de polyvinyle, un chlorure de polyvinylidène, un fluorure de polyvinylidène, un polystyrène, un alcool polyvinylique, un polyuréthane, une résine cellulosique, un nitrate de cellulose, un acétate de cellulose, un butyrate-acétate de cellulose, l'éthylcellulose, un copolymère d'acétate de vinyle-éthylène, un copolymère d'éthylène-acide acrylique, un copolymère séquencé de styrène-butadiène ; et
➢ un deuxième matériau choisi parmi une polyoléfine comprenant de 1 à 8 atomes de carbone, un polyéthylène, un polypropylène, un polybutylène, les copolymères de polybutylène, un polytétrafluoroéthylène, un polyester, un copolyester, un téréphtalate de polyéthylène, un acétate de polyvinyle, un acétate-chlorure de polyvinyle, un polyvinylbutyral, une résine acrylique, un polyacrylate, un polyacrylate de méthyle, un polyméthacrylate de méthyle, un polyamide, un nylon, un chlorure de polyvinyle, un chlorure de polyvinylidène, un fluorure de polyvinylidène, un polystyrène, un alcool polyvinylique, un polyuréthane, une résine cellulosique, un nitrate de cellulose, un acétate de cellulose, un butyrate-acétate de cellulose, l'éthylcellulose, un copolymère d'acétate de vinyle-éthylène, un copolymère d'éthylène-acide acrylique, un copolymère séquencé de styrène-butadiène.
